# EUROPÄISCHE PATENTSCHRIFT

(11) **EP 2 059 820 B1**
(45) Veröffentlichungstag und Bekanntmachung des Hinweises auf die Patenterteilung: **12.05.2010**
(21) Anmeldenummer: 07819976.7
(22) Anmeldetag: 28.08.2007
(51) Int. Cl.: G01P 3/50, G01P 3/66, G01P 21/02

(54) **GESCHWINDIGKEITSERFASSUNG FÜR EIN TACHOGRAPHENSYSTEM**
SPEED DETECTION FOR A TACHOGRAPH SYSTEM
DÉTECTION DE VITESSE POUR UN SYSTÈME TACHYGRAPHIQUE

(30) Priorität: 29.08.2006 DE 102006040297
(43) Veröffentlichungstag der Anmeldung: 20.05.2009
(73) Patentinhaber: Continental Automotive GmbH, 30165 Hannover (DE)
(72) Erfinder: FRITSCH, Gerd, 81827 München (DE); SCHMIDT, Gunnar, 78052 Villingen-Schwenningen (DE)
(86) Internationale Anmeldenummer: PCT/EP2007/058913
(87) Internationale Veröffentlichungsnummer: WO 2008/025763

(56) Entgegenhaltungen:
- EP-A- 0 638 877
- DE-A1- 10 210 320
- US-A1- 2003 088 348

## Beschreibung

Die vorliegende Erfindung befasst sich mit einem Verfahren zum Erfassen und Speichern wenigstens der Geschwindigkeit als registrierrelevante Information für ein Tachographensystem, bei dem in einer Recheneinheit Signale zur Bestimmung der Geschwindigkeit von wenigstens zwei unabhängigen Sensoren erfasst und durch Vergleichen auf ihre Plausibilität geprüft werden und bei signifikant abweichenden Signalen eine sensorbezogene Fehlermeldung gespeichert wird. Die Erfindung befasst sich auch mit einem solchen Tachographensystem.

Tachographensysteme werden in Fahrzeugen verwendet, um bestimmte Informationen zu erfassen und zu speichern, beispielsweise in Lastkraftwagen oder in Bussen, um die gesetzliche Aufschriebpflicht für die sogenannten registrierrelevanten Informationen bei bestimmten Fahrzeuggattungen und Fahrzeugnutzungen zu erfüllen. Die Tachographensysteme dienen außerdem zur Kontrolle der Einhaltung der gesetzlich vorgeschriebenen Fahrtzeiten bzw. Ruhepausen sowie zur Kontrolle der Geschwindigkeitsbegrenzungen. Die auch als Fahrtenschreiber bekannten Tachographensysteme bestehen im Wesentlichen aus einer Registriereinheit und einem Sensor zur Ermittlung der Geschwindigkeit, der auch als Speedsensor bezeichnet wird. Die von älteren Fahrtenschreibern bekannten Scheiben aus Papier, auf denen die gefahrene Geschwindigkeit von dem Fahrtenschreiber aufgetragen wurde, sind bei modernen Fahrtenschreibern, den sogenannten digitalen Tachographen (DTCO), durch einen Speicher in Form einer Chipkarte ersetzt. Bei den digitalen Tachographen liefert der Speedsensor Daten, aus denen in der Registriereinheit alle registrierrelevanten Daten, wie z. B. Geschwindigkeit, gefahrene Strecke etc. berechnet und auf der Chipkarte gespeichert werden. Der Speedsensor ist dabei neben einem Zeiterfassungssensor die einzige Datenquelle zur Berechnung der Geschwindigkeit als registrierrelevanter bzw. aufschiebpflichtiger Informationen. Um eine Manipulation des Tachographensystems zu verhindern, ist der Speedsensor mit dem Fahrzeuggetriebe verplombt. Zusätzlich erfolgt die Verbindung zwischen Speedsensor und der Registriereinheit über ein standardisiertes Protokoll, das eine entsprechende Verschlüsselung aufweist. Es hat sich jedoch gezeigt, dass im Falle eines trotz der Sicherheitsvorkehrungen manipulierten Speedsensors eine Manipulation des Systems nicht erkannt wird, so dass eine Registrierung falscher Daten erfolgt. Außerdem ist bei einem Ausfall des Speedsensors kein Aufschrieb der registrierrelevanten Daten mehr möglich.

Aus der DE 196 15 248 A1 ist ein Verfahren zum Bestimmen einer Geschwindigkeit eines Fahrzeugs bekannt, bei der die Geschwindigkeit aus der Drehzahl eines Rades bestimmt wird. Um gesetzlichen Anforderungen zu genügen, soll durch einen Korrekturwert sichergestellt werden, dass die Geschwindigkeitsanzeige des Fahrzeugs auf keinen Fall niedriger ist, als die tatsächliche Geschwindigkeit. Der Korrekturwert wird durch die Erfassung von Positionsdaten und einer aus den Positionsdaten errechneten Geschwindigkeit gewonnen. Dadurch soll beispielsweise der Verschleiß des Reifenprofils oder der Beladungszustand und der Reifendrück berücksichtigt werden.

Weiter ist in der DE 100 15 304 A1 ein Navigationssystem beschrieben, bei dem in einem Navigationsgerät verschiedene Fahrtparameter wie Geschwindigkeit, Drehbeschleunigung, Linearbeschleunigung, Unfallindikatoren etc. erfasst und auf eine Chipkarte gespeichert werden. Maßnahmen zum Schutz gegen Manipulation oder zum Erkennen eines fehlerhaften Sensors sind nicht vorgesehen. Das Navigationssystem stellt lediglich eine Art Fahrtenschreiber dar, der um die Funktion eines auch unter der Bezeichnung "Black Box" bekannten Unfallschreibers erweitert ist, der Fahrdaten in den letzten Minuten beziehungsweise Sekunden vor einem Unfall speichert, um den Hergang des Unfalls rekonstruieren zu können.

In der US 2003/088348 A1 und der EP 0 638 877 werden Verfahren der eingangs genannten Art vorgeschlagen.

Die DE 102 10 320 A1 befasst sich mit der Fahrzeitenkontrolle bei Lastkraftwagen durch duale Aufzeichnung.

Die Aufgabe der vorliegenden Erfindung besteht darin, ein Verfahren zu schaffen, das einen möglichst großen Schutz gegen Manipulationen eines Tachographensystems aufweist.

Erfindungsgemäß wird die Aufgabe durch ein Verfahren der eingangs genannten Art gelöst, bei dem einem Sensor eine Leitfunktion zugeordnet ist und der Leitsensor mit Hilfe der Signale der anderen Sensoren auf seine Plausibilität hin geprüft wird, wobei bei von einer Mehrzahl der Sensoren gelieferten, voneinander nur innerhalb bestimmter Grenzwerte abweichenden Signalen ein davon signifikant abweichendes Signal des Leitsensors als falsch gekennzeichnet wird, die Geschwindigkeit nur mit Hilfe der plausibilisierten Signale der anderen Sensoren ermittelt wird und eine Fehlermeldung in dem Speicher abgelegt wird.

Der Vorteil des erfindungsgemäßen Verfahrens besteht darin, dass sich durch Abfragen der gespeicherten Fehlermeldungen ein Ausfall oder eine Manipulation eines Sensors leicht erkennen lässt. Dies kann sowohl für Servicezwecke in der Werkstatt als auch für die stichprobenartige Überprüfung durch die Polizei verwendet werden, d. h. durch die Speicherung der Fehlermeldung lässt sich kontrollieren, ob die aufgezeichnete Geschwindigkeit richtig oder falsch ist. Die Aufzeichnung der Geschwindigkeit erfolgt nur bei intakten und nicht manipulierten Sensoren. Da bei der Berechnung bzw. Registrierung der registrierrelevanten bzw. aufschriebpflichtige Informationen mehrere Datenquellen zur Verfügung stehen und ein Ausfall oder eine Manipulation eines Sensors erkannt wird, kann die zu speichernde Geschwindigkeit trotzdem ermittelt werden, Dadurch, dass einem Sensor eine Leitfunktion zugeordnet ist und der Leitsensor mit Hilfe der Signale der wenigstens zwei anderen Sensoren auf seine Plausibilität hin geprüft wird, lässt sich ein Fehler oder eine Manipulation des Leitsensors erkennen. Aufgrund der Ermittlung eines signifikant abweichenden Signals des Leitsensors können die registrierrelevanten Informationen trotz eines Fehlers oder einer Manipulation des Leitsensors zu erfassen und zu speichern. Die Festlegung, wie viele Sensoren eine erforderliche Mehrzahl darstellen, erfolgt in Abhängigkeit von der Sensorenanzahl. Handelt es sich beispielsweise um drei Sensoren, von denen zwei Sensoren Signale liefern, die voneinander nur innerhalb bestimmter Grenzwerte abweichen, kann ein davon signifikant abweichendes Signal des Leitsensors durch die zwei Signale der anderen beiden Sensoren erkannt werden. Für eine möglichst zuverlässige Ermittlung der Geschwindigkeit wird man bei einer größeren Anzahl an Sensoren festlegen, dass auch entsprechend mehr Sensoren Signale liefern müssen, die voneinander nur innerhalb bestimmter Grenzwerte abweichen.

In einer bevorzugten Ausführungsform werden die Daten zwischen wenigstens einem Sensor und der Recheneinheit verschlüsselt übertragen, um das Verfahren zusätzlich gegen Manipulation zu schützen.

Gegenstand der Erfindung ist auch ein Tachographensystem zur Erfassung registrierrelevanter Fahrzeugdaten, das wenigstens drei Sensoren zur Erfassung der Geschwindigkeit des Fahrzeugs, eine mit den Sensoren verbundenen Recheneinheit zum Vergleichen der Signale und zum Ausschließen fehlerhafter Signale sowie einen Speicher zum Speichern wenigstens der Geschwindigkeit als registerrelevante Information aufweist, wobei wenigstens einer der Sensoren ein Drehzahlmesser ist, der auf der Abtriebsseite des Getriebes angeordnet ist und als Sensor für die Geschwindigkeitserfassung dienst. Bei dem Vergleich der Signale ist dem Drehzahlmesser eine Leitfunktion zugeordnet, wobei das Signal des Drehzahlmessers mittels der anderen Sensoren auf seine Plausibilität hin überprüfbar ist und mittels der Recheneinheit fehlerhafte Signale ausschließbar sind sowie die Geschwindigkeit nur mit Hilfe derjenigen von den Sensoren gelieferten Signale ermittelbar ist, die voneinander nur innerhalb bestimmter Grenzwerte abweichen. Der Drehzahlmesser ist ein sogenannter Speedsensor, der bei Fahrtenschreibern üblicherweise zum Einsatz kommt. Durch die drei Sensoren lässt sich ein fehlerhafter oder manipulierter Sensor ermitteln, um die Zuverlässigkeit des Systems zu erhöhen.

In einer bevorzugten Ausführungsform ist wenigstens einer der Sensoren ein Positionssensor, der Positionsdaten des Fahrzeugs erfasst und die Geschwindigkeit ist mit Hilfe der Signale des Positionssensors ermittelbar. Als Positionssensor kann ein GPS-Empfänger verwendet werden, der in die Recheneinheit integriert ist. Der GPS-Empfänger ermittelt anhand von Satellitensignalen Positionsdaten des Kraftfahrzeugs, aus denen sich eine tatsächlich gefahrene Strecke und zusammen mit einer für diese gefahrene Strecke erfassten Zeit eine während dieser Strecke gefahrene Geschwindigkeit berechnen lässt. Da Navigationssysteme in modernen Fahrzeugen oftmals ohnehin vorhanden sind, kann als Positionssensor auch der GPS-Empfänger des Navigationssystems verwendet werden. Ebenfalls denkbar ist es, als Positionssensor den GPS-Empfänger eines Steuergeräts zum so genannten Tracking zu verwenden, das der Rückmeldung an eine Zentrale über den momentanen Aufenthaltsort des Fahrzeuges dient. Die Erfassung von Positionsdaten ist auch mit Hilfe von ortsfesten Transpondern und/oder Sendern möglich. Dies kann beispielsweise mit Hilfe von Vorrichtungen zur Erfassung einer Straßenmaut erfolgen, die dem vorbeifahrenden Fahrzeug Positionsdaten zur Verfügung stellen.

Vorzugsweise ist wenigstens einer der Sensoren ein ABS-Radsensor zur Ermittlung der Raddrehzahl, mit deren Hilfe die Geschwindigkeit ermittelbar ist. Da ABS-Systeme bei modernen Fahrzeugen standardmäßig vorhanden sind, kann auf diese zurückgegriffen werden, um den Aufwand und Kosten für das Tachographensystem möglichst gering zu halten. Da es beispielsweise bei engen Kurvenradien oder bei Schlupf eines Antriebsrades zu Abweichungen der Raddrehzahlen der verschiedenen Räder untereinander kommt, kann aus den an den verschiedenen Rädern einer Achse vorhandenen ABS-Radsensoren ein Mittelwert gebildet werden. Eine Korrektur der Radsensorwerte kann auch mit Hilfe eines Lenkwinkelsensors vorgenommen werden, der bei elektronischen Stabilitätsprogrammen ohnehin vorgesehen ist. Hier können dann alle Sensoren unabhängig voneinander eingesetzt werden, so dass die Sicherheit gegen Manipulation weiter erhöht wird.

Weiterhin bevorzugt ist eine Ausführungsform, bei der wenigstens einer der Sensoren ein Drehzahlmesser zur Erfassung der Motordrehzahl ist und zusammen mit einem Gangsensor zur Erfassung des eingelegten Ganges für die Geschwindigkeitserfassung vorgesehen ist. Da die Erfassung der Motordrehzahl ohnehin erfolgt, stellt dies einen weiteren kostengünstigen Sensor zur Verfügung.

Aus der Aufzählung der verschiedenen Sensoren ist ersichtlich, dass die Plausibilisierung der von dem Tachographensystem erfassten Geschwindigkeit vorzugsweise mit ohnehin im Fahrzeug vorhandenen Sensoren erfolgt. Je größer die Zahl der unabhängigen Signale ist, desto größer ist der Schutz des Systems gegen Manipulation oder fehlerhafte Sensoren. Da bei einer großen Zahl zusätzlicher Sensoren eine Manipulation nur dann erfolgreich ist, wenn alle Sensoren in gleicher Weise manipuliert sind, kann der so genannte Speedsensor einfacher ausgeführt sein, d. h. ohne hohen Manipulationsschutz wie beispielsweise das Verplomben oder das verschlüsselte Übertragen der Daten, soweit dies gesetzlich möglich ist.

Nachfolgend wird anhand der beigefügten Zeichnungen näher auf ein Ausführungsbeispiel der Erfindung eingegangen. Es zeigen:
- Fig. 1: ein Schema eines Tachographensystem mit einer Registriereinheit und drei unabhängigen Sensoren und
- Fig. 2: beispielhaft einen Ausschnitt des Ablaufs einer Plausibilitätsprüfung unter Verwendung von GPS-Daten.

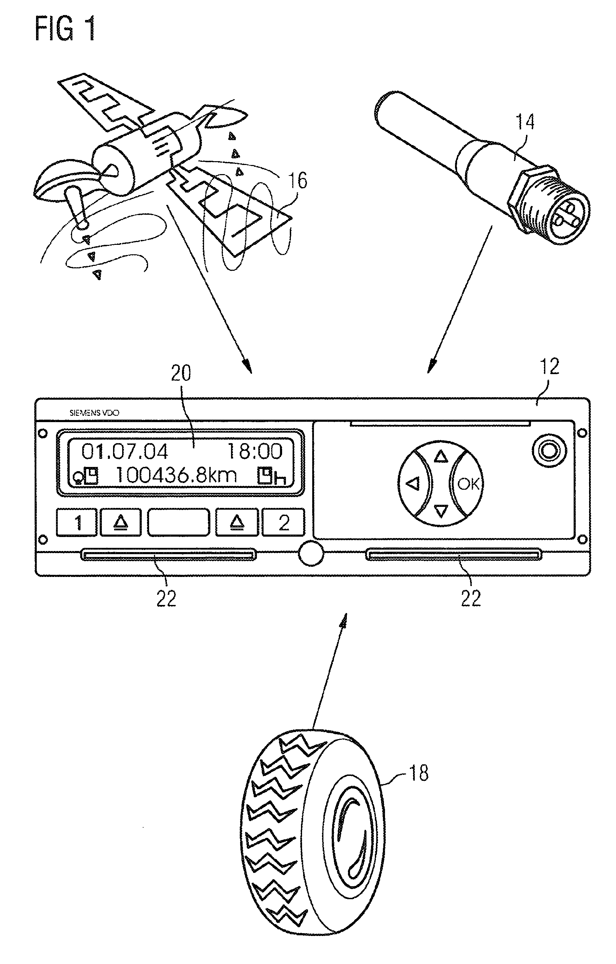

In Fig. 1 ist schematisch der Aufbau eines erfindungsgemäßen Tachographensystems gezeigt. In einer Registriereinheit 12 ist eine Recheneinheit vorgesehen. Die Registriereinheit 12 ist mit wenigstens drei unabhängigen Sensoren 14, 16, 18 zur Erfassung der Geschwindigkeit des Fahrzeugs verbunden. Bei dem ersten Sensor 14 handelt es sich um einen so genannten Speedsensor, der als Drehzahlmesser auf der Abtriebsseite des Getriebes des Fahrzeugs angeordnet ist. Bei dem zweiten Sensor 16 handelt es sich um einen Positionssensor, der mit Hilfe von GPS-Signalen Positionsdaten des Fahrzeugs erfasst, mit denen die Geschwindigkeit des Fahrzeugs ermittelbar ist. Bei dem dritten Sensor 18 handelt es sich um einen ABS-Radsensor zur Ermittlung der Radrehzahl, mit deren Hilfe die Geschwindigkeit ermittelbar ist.

Die Registriereinheit 12 verfügt über eine Anzeigevorrichtung 20 und Schreib-/Leseeinrichtungen 22 zum Einführen von Chipkarten zum Speichern registrierrelevanter Informationen.

In der Recheneinheit der Registriereinheit 12 werden die Signale der Sensoren 14, 16, 18 erfasst. Die Signale werden miteinander verglichen und auf ihre Plausibilität hin geprüft, indem von einer Mehrzahl an Signalen signifikant abweichende Signale von der Erfassung ausgeschlossen werden und die zu speichernde Geschwindigkeit des Fahrzeugs nur mit Hilfe derjenigen Signale ermittelt wird, die voneinander nur innerhalb bestimmter Grenzwerte abweichen. In Abhängigkeit der von den Sensoren 14, 16, 18 erzeugten Signale kann es erforderlich sein, die Signale aufzuarbeiten, um sie vergleichen zu können. Dies wäre beispielsweise der Fall, wenn ein Sensor ein Spannungssignal abgibt und ein anderer Sensor ein Pulssignal erzeugt. Selbstverständlich ist es auch möglich, mit den verschiedenen Signalen jeweils eine Geschwindigkeit des Fahrzeugs zu errechnen, und die Geschwindigkeiten miteinander zu vergleichen. Die Bestimmung der Grenzwerte kann sowohl absolut als auch relativ in Abhängigkeit der Geschwindigkeit des Fahrzeugs erfolgen.

Wenn alle drei Signale voneinander nur innerhalb bestimmter Grenzwerte abweichen, kann davon ausgegangen werden, dass weder eine Manipulation noch ein Fehler eines Sensors 14, 16, 18 vorliegt. Entsprechend können alle drei Signale der Sensoren 14, 16, 18 zur Ermittlung der zu speichernden Geschwindigkeit herangezogen werden oder das Signal eines bevorzugten Sensors.

Wenn eines der Signale von den anderen Signalen signifikant abweicht, ist dies ein Anzeichen für einen fehlerhaften oder manipulierten Sensor 14, 16, 18. Das signifikant abweichende Signal wird von der Erfassung ausgeschlossen, so dass die Ermittlung der zu speichernden Geschwindigkeit des Fahrzeugs nur mit Hilfe der anderen Signale erfolgt, die voneinander nur innerhalb bestimmter Grenzwerte abweichen, wobei entweder ein bestimmtes Signal ausgewählt wird oder die Werte der korrekt arbeitenden Sensoren gemittelt werden.

Bei dem GPS-Empfänger 16 kann es sich um einen GPS-Empfänger eines Navigationssystems handeln, das heutzutage üblicherweise als separates Einbaugerät zum Einsatz kommt. Bei dem GPS-Empfänger 16 kann es sich aber auch um ein vor allem in Lastkraftwagen verwendetes Steuergerät zum so genannten Tracking handeln, das lediglich Positionsdaten liefert und keine Routenverläufe berechnen kann. Beim Tracking werden die Positionsangaben an eine Zentrale der Fahrzeugflotte gemeldet, so dass die Standorte der Fahrzeuge von allen Teilnehmern des Flottenverbunds abrufbar sind. Selbstverständlich kann der GPS-Empfänger 16 auch in die Registriereinheit 12 integriert sein.

Bei dem ABS-Sensor 18 handelt es sich um einen bei einem ABS-System eines Fahrzeugs ohnehin vorhandenen Sensor. Da Fahrzeuge heutzutage in der Regel serienmäßig mit einem ABS-System ausgestattet sind, stellt die Verwendung eines ABS-Sensors einen kostengünstigen Sensor für das Tachographensystem zur Verfügung. Da ein einzelner ABS-Sensor bei engen Kurvenfahrten oder bei Schlupf des Rades einen von der tatsächlichen Geschwindigkeit des Fahrzeugs abweichenden Wert liefert, kann es sinnvoll sein, alle ABS-Sensoren oder die Sensoren einer Achse des Fahrzeugs zu verwenden, um aus den jeweiligen Signalen einen Mittelwert zu bilden, der an die Registriereinheit 12 gesendet wird, die Korrektur kann aber auch durch das Signal eines Lenkwinkelsensors vorgenommen werden.

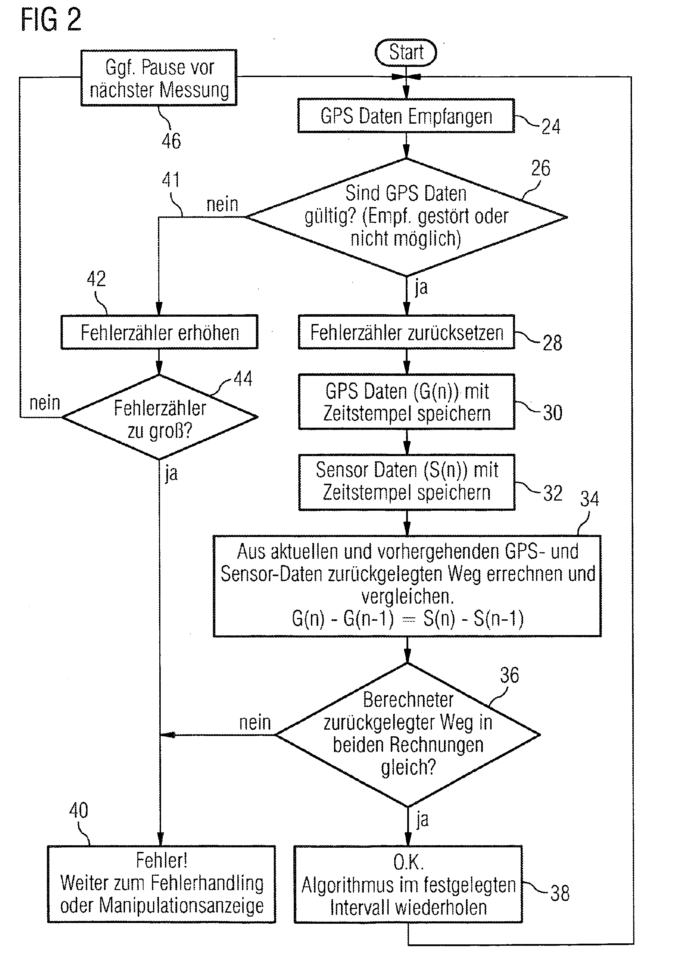

In Fig. 2 ist ein Ablauf einer Plausibilitätsprüfung beispielhaft unter Verwendung von GPS-Daten gezeigt. Selbstverständlich ist der Ablauf auch auf andere Daten übertragbar.

Zu Beginn des Algorhythmus steht der Empfang 24 von GPS-Daten, die beispielsweise durch den GPS-Empfänger 16 zur Verfügung gestellt sind. Daraufhin findet eine Überprüfung 26 statt, ob die GPS-Daten gültig sind, d. h. ob der Empfang gestört oder gar nicht möglich ist. Bei gültigen GPS-Daten erfolgt ein Zurücksetzen 28 eines Fehlerzählers der Registriereinheit 12. Daraufhin werden die GPS-Daten (G₍ₙ₎) mit einem Zeitstempel 30 gespeichert. Unmittelbar danach werden Daten (S₍ₙ₎) eines anderen Sensors, beispielsweise des Speedsensors 14 mit einem Zeitstempel 32 gespeichert. Anschließend erfolgt eine Berechnung 34 des zurückgelegten Wegs aus den aktuellen und den vorhergehenden GPS-Daten sowie den aktuellen und den vorhergehenden Sensordaten. Weiter erfolgt ein Vergleich 36, ob der berechnete zurückgelegte Weg in beiden Rechnungen, d. h. bei beiden Sensordaten gleich ist. Bei positivem Ergebnis des Vergleichs 36 erfolgt ein Signal 38 zum Wiederholen des Algorhythmus in festgelegten Intervallen.

Ist das Resultat des Vergleichs 36 negativ, d. h. die berechneten zurückgelegten Wege sind unterschiedlich groß, erfolgt eine Fehlermeldung 40. Dadurch werden weitere Schritte zum Fehlerhandling des Systems ausgelöst und/oder es erfolgt eine Manipulationsanzeige auf der Anzeigevorrichtung 20 der Registriereinheit 12. Zusätzlich wird die Fehlermeldung 40 auf der Chipkarte und/oder in der Registriereinheit 12 gespeichert.

Wenn das Resultat der Gültigkeitsprüfung 26 der GPS-Daten negativ ist, erfolgt eine Fehlermeldung 41 und damit ein Erhöhen 42 des Fehlerzählers. In einer Abfrage 44 des Fehlerzählers wird ermittelt, ob der Fehlerzähler einen festgelegten Wert überschreitet. Ist dies nicht der Fall, erfolgt ein Befehl zum erneuten Empfangen 24 von GPS-Daten. Gegebenenfalls wird eine Pause 46 vor der nächsten Messung vorgesehen. Liegt der Wert des Fehlerzählers oberhalb eines festgelegten Werts, deutet dies auf einen wiederholt gestörten oder nicht möglichen Empfang 24 der GPS-Daten hin. Daraufhin wird das Verfahren abgebrochen und die Fehlermeldung 40 erscheint auf dem Display bzw. wird auf der Chipkarte und/oder in der Registriereinheit 12 abgespeichert.

## Patentansprüche

1. Verfahren zum Erfassen und Speichern weinigstens der Geschwindigkeit als registrierrelevanter Information für ein Tachographensystem, bei dem in einer Recheneinheit Signale zur Bestimmung der Geschwindigkeit von wenigstens zwei unabhängigen Sensoren (14, 16, 18) erfasst und durch Vergleichen auf ihre Plausibilität geprüft werden und bei signifikant abweichenden Signalen eine sensorbezogene Fehlermeldung gespeichert wird,
**dadurch gekennzeichnet, dass** wenigstens drei unabhängigen Sensoren (14, 16, 18) vorgesehen sind, einem Sensor (14) eine Leitfunktion zugeordnet ist und der Leitsensor mit Hilfe der Signale der anderen Sensoren (16, 18) auf seine Plausibilität hin geprüft wird, wobei bei von einer Mehrzahl der Sensoren (14, 16, 18) gelieferten, voneinander nur innerhalb bestimmter Grenzwerte abweichenden Signalen ein davon signifikant abweichendes Signal des Leitsensors (14) als falsch **gekennzeichnet** wird, die Geschwindigkeit nur mit Hilfe der plausibilisierten Signale der anderen Sensoren (16 ,18) ermittelt wird und eine Fehlermeldung in dem Speicher abgelegt wird.

2. Verfahren nach Anspruch 1,
**dadurch gekennzeichnet, dass** die Daten zwischen wenigstens einem Sensor (14, 16, 18)und der Recheneinheit verschlüsselt übertragen werden.

3. Tachographensystem für ein Verfahren zur Erfassung registrierrelevanter Fahrzeugdaten nach einem der vorhergehenden Ansprüche, mit wenigstens zwei Sensoren (14, 16, 18) zur Erfassung der Geschwindigkeit des Fahrzeugs, einer mit den Sensoren (14, 16, 18) verbundenen Recheneinheit zum Vergleichen der Signale und einem Speicher zum Speichern wenigstens der Geschwindigkeit als registrierrelevanter Information, wobei wenigstens einer der Sensoren (14) ein Drehzahlmesser auf der Abtriebsseite des Getriebes ist und als Sensor für die Geschwindigkeitserfassung dient,
**dadurch gekennzeichnet, dass** drei unabhängige Sensoren (14, 16, 18) vorgesehen sind und dem Drehzahlmesser (14) eine Leitfunktion bei dem Vergleich der Signale zugeordnet ist, wobei das Signal des Drehzahlmessers mittels der anderen Sensoren (16, 18) auf seine Plausibilität hin überprüfbar ist und mittels der Recheneinheit fehlerhafte Signale ausschießbar sind sowie die Geschwindigkeit nur mit Hilfe derjenigen von den Sensoren (14, 16, 18) gelieferten Signale ermittelbar ist, die voneinander nur innerhalb bestimmter Grenzwerte abweichen.

4. Tachographensystem nach Anspruch 3,
**dadurch gekennzeichnet, dass** der Drehzahlmesser (14) verplombt ist.

5. Tachographensystem nach Anspruch 3 oder 4,
**dadurch gekennzeichnet, dass** wenigstens einer der Sensoren (16) ein Positionssensor ist, der Positionsdaten des Fahrzeugs erfasst und die Geschwindigkeit mit Hilfe der Signale des Positionssensors ermittelbar ist.

6. Tachographensystem nach Anspruch 5,
**dadurch gekennzeichnet dass** der Positionssensor (16) ein GPS-Empfänger ist, der in die Recheneinheit integriert ist.

7. Tachographensystem nach Anspruch 5 oder 6,
**dadurch gekennzeichnet, dass** ein GPS-Empfänger eines Navigationssystem als Positionssensor (16) dient.

8. Tachographensystem nach einem der Ansprüche 3 bis 7,
**dadurch gekennzeichnet, dass** wenigstes einer der Sensoren (18) ein ABS-Radsensor zur Ermittlung der Raddrehzahl ist, mit deren Hilfe die Geschwindigkeit ermittelbar ist.

9. Tachographensystem nach einem der Ansprüche 3 bis 8,
**dadurch gekennzeichnet, dass** wenigstes einer der Sensoren ein Drehzahlmesser zur Erfassung der Motordrehzahl ist und zusammen mit einem Gangsensor zur Erfassung des eingelegten Ganges für die Geschwindigkeitserfassung vorgesehen ist.

10. Tachographensystem nach einem der Ansprüche 3 bis 9,
**dadurch gekennzeichnet, dass** wenigstens einer der Sensoren ein Empfänger für das Empfangen einer von einer stationären Geschwindigkeitsmesseinrichtung ermittelten Geschwindigkeit vorgesehen ist.

11. Tachographensystem nach einem der Ansprüche 3 bis 10,
**dadurch gekennzeichnet dass** die zwischen wenigstens einem Sensor und der Recheneinheit übertragenen Daten verschlüsselt sind.

## Claims

1. Method for detecting and storing at least the speed as a piece of registration-relevant information for a tachograph system, in which a computation unit is used to detect signals for determining the speed of at least two independent sensors (14, 16, 18) and to check them for plausibility by comparing them, and a sensor-related error message is stored if the signals differ significantly,
**characterized in that** at least three independent sensors (14, 16, 18) are provided, a sensor (14) has an associated pilot function and the pilot sensor is checked for plausibility using the signals from the other sensors (16, 18), wherein, in the case of signals which are supplied by a plurality of the sensors (14, 16, 18) and which differ from one another within particular limit values only, a signal from the pilot sensor (14) which differs significantly therefrom is flagged as erroneous, the speed is ascertained using only the plausibility-checked signals from the other sensors (16, 18), and an error message is stored in the memory.

2. Method according to Claim 1,
**characterized in that** the data are transmitted between at least one sensor (14, 16, 18) and the computation unit in encrypted form.

3. Tachograph system for a method for capturing registration-relevant vehicle data according to one of the preceding claims, having at least two sensors (14, 16, 18) for detecting the speed of the vehicle, a computation unit, connected to the sensors (14, 16, 18), for comparing the signals, and a memory for storing at least the speed as a piece of registration-relevant information, wherein at least one of the sensors (14) is a tachometer on the output side of the gearbox and is used as a sensor for the speed detection,
**characterized in that** three independent sensors (14, 16, 18) are provided and the tachometer (14) has an associated pilot function for the comparison of the signals, wherein the signal from the tachometer can be checked for plausibility using the other sensors (16, 18) and the computation unit can be used to exclude erroneous signals and also the speed can be ascertained using only those signals supplied by the sensors (14, 16, 18) which differ from one another within particular limit values only.

4. Tachograph system according to Claim 3,
**characterized in that** the tachometer (14) is sealed.

5. Tachograph system according to Claim 3 or 4,
**characterized in that** at least one of the sensors (16) is a position sensor which captures position data for the vehicle, and the speed can be ascertained using the signals from the position sensor.

6. Tachograph system according to Claim 5,
**characterized in that** the position sensor (16) is a GPS receiver which is integrated in the computation unit.

7. Tachograph system according to Claim 5 or 6,
**characterized in that** a GPS receiver in a navigation system is used as the position sensor (16).

8. Tachograph system according to one of Claims 3 to 7,
**characterized in that** at least one of the sensors (18) is an ABS wheel sensor for ascertaining the wheel speed, which can be used to ascertain the speed.

9. Tachograph system according to one of Claims 3 to 8,
**characterized in that** at least one of the sensors is a tachometer for detecting the engine speed and, together with a gear sensor for detecting the selected gear, is provided for the speed detection.

10. Tachograph system according to one of Claims 3 to 9,
**characterized in that** at least one of the sensors is a receiver for receiving a speed ascertained by a fixed speed-measuring device.

11. Tachograph system according to one of Claims 3 to 10,
**characterized in that** the data transmitted between at least one sensor and the computation unit are encrypted.

## Revendications

1. Procédé permettant, pour un système tachygraphe, de détecter et de mémoriser au moins la vitesse en tant qu'information intéressante au titre de l'enregistrement, procédé au cours duquel, dans une unité de calcul, des signaux destinés à la détermination de la vitesse sont détectés par au moins deux capteurs indépendants (14, 16, 18), la plausibilité des signaux étant vérifiée par une comparaison et, dans le cas où les signaux dévient l'un de l'autre d'une manière significative, un message d'erreur se rapportant aux capteurs est mémorisé,
**caractérisé par le fait**
**qu'**il est prévu au moins trois capteurs indépendants (14, 16, 18), qu'une fonction de référence est attribuée à un capteur (14) et que le capteur de référence est soumis à un contrôle de plausibilité à l'aide des signaux des autres capteurs (16, 18), au cours duquel, dans le cas où des signaux délivrés par une majorité de capteurs (14, 16, 18) ne dévient les uns des autres qu'à l'intérieur d'une plage de valeurs seuils déterminées, un signal du capteur de référence (14) qui diffère des autres signaux d'une manière importante est considéré comme erroné, la vitesse n'est déterminée qu'avec l'aide des signaux plausibles des autres capteurs (16, 18) et un message d'erreur est stocké dans la mémoire.

2. Procédé selon la revendication 1,
**caractérisé par le fait**
**que** les données sont transmises sous une forme cryptée entre au moins un capteur (14, 16, 18) et l'unité de calcul.

3. Système tachygraphe pour un procédé, conforme à l'une des revendications précédentes, permettant de collecter des données d'un véhicule automobile intéressantes au titre de l'enregistrement, ledit système comportant au moins deux capteurs (14, 16, 18) permettant de détecter la vitesse du véhicule, une unité de calcul reliée aux capteurs (14, 16, 18) et permettant de comparer les signaux et une mémoire permettant d'enregistrer au moins la vitesse en tant qu'information intéressante au titre de l'enregistrement, où au moins l'un des capteurs (14) est un compteur de tours sur le côté sortie de la transmission et sert de capteur pour la détection de la vitesse,
**caractérisé par le fait**
**qu'**il est prévu trois capteurs indépendants (14, 16, 18) et qu'une fonction de référence est attribuée au compteur de tours (14) pour la comparaison des signaux, le signal du compteur de tours pouvant être vérifié en ce qui concerne sa plausibilité au moyen des autres capteurs (16, 18), des signaux erronés pouvant être exclus au moyen de l'unité de calcul et la vitesse pouvant être déterminée seulement à l'aide des signaux délivrés par les capteurs (14, 16, 18) qui ne dévient les uns des autres qu'à l'intérieur d'une plage de valeurs seuils déterminées.

4. Système tachygraphe selon la revendication 3,
**caractérisé par le fait**
**que** le compteur de tours (14) est plombé.

5. Système tachygraphe selon la revendication 3 ou 4,
**caractérisé par le fait**
**que** au moins l'un des capteurs (16) est un capteur de position, qu'il collecte les données de position du véhicule et que la vitesse peut être déterminée à l'aide des signaux du capteur de position.

6. Système tachygraphe selon la revendication 5,
**caractérisé par le fait**
**que** le capteur de position (16) est un récepteur GPS qui est intégré dans l'unité de calcul.

7. Système tachygraphe selon la revendication 5 ou 6,
**caractérisé par le fait**
**qu'**un récepteur GPS d'un système de navigation sert de capteur de position (16).

8. Système tachygraphe selon l'une des revendications 3 à 7,
**caractérisé par le fait**
**que** au moins l'un des capteurs (18) est un capteur de roue pour le système de freinage à antiblocage permettant de déterminer la vitesse de rotation d'une roue et avec lequel il est possible de déterminer la vitesse.

9. Système tachygraphe selon l'une des revendications 3 à 8,
**caractérisé par le fait**
**que** au moins l'un des capteurs est un compteur de tours permettant de détecter la vitesse de rotation du moteur et qu'il est prévu pour détecter la vitesse du véhicule en commun avec un détecteur de la position de la boîte de vitesses.

10. Système tachygraphe selon l'une des revendications 3 à 9,
**caractérisé par le fait**
**que** au moins l'un des capteurs est un récepteur et qu'il est prévu pour recevoir une vitesse déterminée par un dispositif stationnaire permettant de mesurer la vitesse.

11. Système tachygraphe selon l'une des revendications 3 à 10,
**caractérisé par le fait**
**que** les donnés transmises entre au moins un capteur et l'unité de calcul sont cryptées.
